# EUROPÄISCHE PATENTSCHRIFT

(11) **EP 2 342 100 B1**
(45) Veröffentlichungstag und Bekanntmachung des Hinweises auf die Patenterteilung: **13.01.2016**
(21) Anmeldenummer: 09778324.5
(22) Anmeldetag: 04.09.2009
(51) Int. Cl.: B60R 19/36, B60R 22/28, B60R 22/34, B62D 1/19

(54) **KRAFTBEGRENZUNGSEINRICHTUNG FÜR EIN KRAFTFAHRZEUG**
FORCE LIMITING DEVICE FOR A MOTOR VEHICLE
DISPOSITIF LIMITEUR D'EFFORT POUR VÉHICULE AUTOMOBILE

(30) Priorität: 02.10.2008 DE 102008049931
(43) Veröffentlichungstag der Anmeldung: 13.07.2011
(73) Patentinhaber: Autoliv Development AB, 447 83 Vårgårda (SE)
(72) Erfinder: JABUSCH, Ronald, 25336 Elmshorn (DE)
(74) Vertreter: Müller Verweyen
(86) Internationale Anmeldenummer: PCT/EP2009/006409
(87) Internationale Veröffentlichungsnummer: WO 2010/037460

(56) Entgegenhaltungen:
- WO-A1-2004/096611
- WO-A1-2006/108451
- WO-A1-2007/130041
- FR-A1- 2 528 928
- US-A1- 2005 133 330

## Beschreibung

Die Erfindung betrifft eine Kraftbegrenzungseinrichtung für ein Kraftfahrzeug mit den Merkmalen des Oberbegriffs von Anspruch 1.

Kraftbegrenzungseinrichtungen sind im Allgemeinen aus verschiedenen Anwendungen in Kraftfahrzeugen bekannt. So sind z.B. Lenkräder bekannt, die im Crashfall durch den aufprallenden Insassen eintauchen, und eine Einrichtung zur Energieabsorption aufweisen, durch die die auf den Insassen einwirkende Kraft begrenzt wird. Ferner sind in der gesamten Fahrzeugstruktur nachgiebige Deformationsglieder vorgesehen, durch die im Crashfall Energie vernichtet wird, so dass die auf die Fahrgastzelle einwirkende Kraft begrenzt wird.

Ferner ist es bekannt, in Sicherheitsgurten Elemente zur Kraftbegrenzung vorzusehen, durch die die im Crashfall auf den Insassen einwirkende Kraft während der durch die Kraftbegrenzungseinrichtung ermöglichten Vorwärtsverlagerung begrenzt wird. Hierzu haben sich in der Praxis vor allem zweiteilige Gurtwellen mit einem zwischen beiden Teilen der Gurtwelle angeordneten Torsionsstab bewährt. Im Crashfall wird dann ein Teil der Gurtwelle gegenüber dem Fahrzeug blockiert, während der jeweils andere Teil mit dem Sicherheitsgurt verbunden ist und in Gurtauszugsrichtung rotiert. Während der Relativdrehung der beiden Teile zueinander wird der zwischen beiden Teilen angeordnete Torsionsstab energieverzehrend um die eigene Achse plastisch verformt, wodurch die Kraft in dem Sicherheitsgurt während der Vorwärtsverlagerung des Insassen entsprechend begrenzt wird. Das Kraftbegrenzungsniveau wird dabei durch den Torsionsstab bestimmt und kann nicht verändert werden.

Aus der auf die Anmelderin zurückgehende WO 2006/108451 A1 ist ein neuartiges Kraftbegrenzungssystem mit den Merkmalen des Oberbegriffs von Anspruch 1 bekannt, welches damit den für die Erfindung nächstliegenden Stand der Technik bildet. Das dort beschriebene Kraftbegrenzungssystem ist aus zwei sich zueinander bewegenden Teilen gebildet, deren Bewegung zueinander durch ein mit einer vorgegebenen Frequenz in Schwingung versetztes Massesystem gesteuert wird. Die Vernichtung der Energie erfolgt dadurch, indem die Teile abwechselnd verzögert und beschleunigt werden, wobei die Frequenz nahezu unabhängig von der einwirkenden Kraft ist. Dadurch können mit diesem Kraftbegrenzungssystem unterschiedliche Kraftbegrenzungsniveaus in Abhängigkeit der Masse der bewegten Teile und des im Gefahrenfall auftretenden Impulses verwirklicht werden, wobei die Frequenz und der Weg der Vorwärtsverlagerung annähernd konstant sind.

Aufgabe der Erfindung ist es, eine Kraftbegrenzungseinrichtung mit zwei eine frequenzbedingt gesteuerte Bewegung zueinander ausführenden Teilen mit einem möglichst einfachen und klein bauenden Aufbau zu schaffen.

Die Lösung der Aufgabe erfolgt dadurch, dass die sich relativ zueinander bewegenden Teile ineinandergreifende Verzahnungen aufweisen und die frequenzbedingt gesteuerte Bewegung dadurch erfolgt, dass wenigstens eines der Teile gegenüber dem anderen Teil eine wellenförmige Vorschubbewegung ausführt, bei der die Verzahnungen wechselnd in Eingriff und außer Eingriff gelangen.

Der Grundgedanke der Erfindung ist darin zu sehen, dass die frequenzbedingt gesteuerte Bewegung nicht durch ein gesondertes Massesystem erfolgt, sondern dadurch, dass die Teile selbst Verzahnungen aufweisen, und wenigstens eines der Teile eine wellenförmige Vorschubbewegung ausführt, die durch das wechselnde in Eingriff und außer Eingriff Gelangen der Verzahnungen gesteuert wird. Die Steuerung der Vorschubbewegung erfolgt damit durch die Bewegung des Teiles selbst, so dass ein gesondertes Massesystem entfällt. Da nunmehr das die kraftbegrenzte Bewegung selbst ausführende Teil auch zur Ausführung der Energie verzehrenden Schwingbewegung genutzt wird, und dieses aufgrund seiner Auslegung bereits eine hohe Masse aufweisen kann, kann durch die erfindungsgemäße Lösung bereits eine sehr große Energie vernichtet werden, ohne dass das Gewicht durch ein zusätzliches Massesystem wie im Stand der Technik erforderlich unnötig vergrößert wird. Damit kann mit der erfindungsgemäßen Kraftbegrenzungseinrichtung bei kleinerem Gewicht der Kraftbegrenzungseinrichtung ein höheres Kraftbegrenzungsniveau erzeugt werden, oder umgekehrt die Kraftbegrenzungseinrichtung für einen vorgegebenen Bereich der Kraftbegrenzung verkleinert werden. Außerdem kann durch das ineinander Greifen der Verzahnungen eine große Anzahl von aneinander anliegenden Zähnen geschaffen werden, wodurch eine entsprechend große Überdeckung erzielt wird und entsprechend große Kräfte aufnehmbar sind. Die mit der Kraftbegrenzungseinrichtung erzeugbare Kraftbegrenzungscharakteristik ist im Übrigen identisch mit der aus der WO 2006/108451 A1 bekannten, so dass diesbezüglich auf diese Schrift ausdrücklich verwiesen wird.

Es wird weiter vorgeschlagen, dass die sich relativ zueinander bewegenden Teile wenigstens ein zweites Paar ineinandergreifender Verzahnungen aufweisen und das zweite Paar ineinandergreifender Verzahnungen versetzt zu dem ersten Paar ineinandergreifender Verzahnungen ineinandergreift. Hierdurch wird das sich mit einer wellenförmigen Vorschubbewegung bewegende Teil wechselweise mit zwei Verzahnungen versetzt in Eingriff gebracht, wodurch die Frequenz vervielfacht und die vernichtete Energie erheblich erhöht wird. Aufgrund der Erhöhung der vernichteten Energie kann die Kraftbegrenzungseinrichtung bei der Auslegung für einen vorgesehenen Bereich eines Kraftbegrenzungsniveaus weiter verkleinert werden.

Bevorzugt sind das erste und das zweite Paar ineinandergreifender Verzahnungen auf gegenüberliegenden Seiten an einem der Teile angeordnet, wobei wenigstens zwei der Verzahnungen an einem Teil versetzt zueinander angeordnet sind. Dadurch führt das außer Eingriff bringen eines Paares von Verzahnungen durch das Abgleiten der Zahnflanken automatisch zu einem in Eingriff bringen des anderen Paares von Verzahnungen, so dass das System bei entsprechender Auslegung nicht stehen bleiben kann.

Weiterhin wird vorgeschlagen, dass zwischen den ineinandergreifenden Verzahnungen ein Dämpfungsmittel angeordnet ist, so dass die hohe Anlaufgeschwindigkeit der Kraftbegrenzungseinrichtung, die sich aufgrund des Impulses zu Anfang der Kraftbegrenzung einstellt, gedämpft wird.

In diesem Fall ist das die Vorschubbewegung ausführende Teil vorzugsweise durch eine drehbare Verzahnungsscheibe mit einer Axialverzahnung gebildet, und die Verzahnungsscheibe mit ihrer Axialverzahnung in eine gehäusefeste Verzahnung in Eingriff bringbar. Die Vorschubbewegung ist dadurch durch die Drehbewegung der Verzahnungsscheibe verwirklicht, so dass diese in ihrer Länge unbegrenzt ist und ferner unabhängig von der Stellung der Verzahnungsscheibe immer die gleiche Anzahl von Zähnen, vorzugsweise die gesamte Verzahnung, in Eingriff mit der gehäusefesten Verzahnung bringbar ist.

Damit die durch die Kraftbegrenzungseinrichtung erzeugte Kraftbegrenzung eine vorbestimmte Grundlast aufweist, wird vorgeschlagen, dass die Verzahnungsscheibe in Richtung des Ineinandergreifens der Axialverzahnung und der gehäusefesten Verzahnung federbelastet ist.

Ferner wird vorgeschlagen, dass die Axialverzahnung durch radial zum Mittelpunkt der Verzahnungsscheibe gerichtete Zähne gebildet ist. Damit wird die Verzahnungsscheibe automatisch durch die Axialverzahnung zentriert, da ein Auslenken der Verzahnungsscheibe aus der zentrierten Lage durch die Zähne selbst verhindert wird.

Eine weitere bevorzugte Ausführung der Erfindung wird dadurch erreicht, indem zwischen der Gurtwelle und dem die wellenförmige Vorschubbewegung ausführenden Teil ein Getriebe vorgesehen ist. Hierdurch kann die Frequenz der Vorschubbewegung, die das Kraftbegrenzungsniveau bestimmt, unabhängig von der Drehbewegung der Gurtwelle in Gurtbandauszugsrichtung ausgelegt werden. Insbesondere kann die Frequenz der Vorschubbewegung erhöht werden, so dass das Kraftbegrenzungsniveau angehoben wird oder die Kraftbegrenzungseinrichtung bei vorgegebenem Kraftbegrenzungsniveau weiter verkleinert werden kann.

Eine besonders günstige Form des Getriebes ist dadurch gegeben, indem dieses ein Planetengetriebe ist, die Gurtwelle drehfest mit den Planetenrädern verbunden ist, und die Verzahnungsscheibe durch das Sonnenrad und/oder einen Innenverzahnungsring gebildet ist, welche Radialverzahnungen aufweisen, in die die Planetenräder eingreifen. Das Planetengetriebe bietet sich insofern an, als dass es einen symmetrischen Aufbau aufweist und platzsparend in einer Ebene angeordnet werden kann, wobei sehr hohe Über- und Untersetzungsverhältnisse mit einem sehr ruhigen Lauf bei kleinem Bauraum möglich sind. Ferner kann die Drehbewegung der Gurtwelle durch die Anbindung über die Planetenräder an mehreren Punkten in das Sonnenrad und/oder den Innenverzahnungsring eingeleitet werden, so dass sich insgesamt eine gute Verteilung des Kraftflusses und damit eine Reduzierung der maximal auftretenden Kräfte in den Bauteilen ergibt.

Ferner wird vorgeschlagen, dass das durch die wellenförmige Vorschubbewegung des Sonnenrades und das durch die wellenförmige Vorschubbewegung des Innenverzahnungsringes erzeugte Kraftbegrenzungsniveau unterschiedlich sind. Damit können mit ein und derselben Kraftbegrenzungseinrichtung zwei verschiedene Kraftbegrenzungsniveaus verwirklicht werden, je nachdem ob das Sonnenrad oder der Innenverzahnungsring angetrieben wird.

Damit das Niveau der Kraftbegrenzung aktiv bestimmt werden kann, wird weiter vorgeschlagen, dass das Sonnenrad und/oder der Innenverzahnungsring eine lösbare Feststelleinrichtung aufweisen. Durch das Festlegen des Sonnenrades oder des Innenverzahnungsringes wird automatisch bestimmt, dass das jeweils andere Teil angetrieben wird und damit das Kraftbegrenzungsniveau bestimmt.

In diesem Fall ist die lösbare Feststelleinrichtung bevorzugt dem Sonnenrad oder dem Innenverzahnungsring zugeordnet, welches/welcher bei der wellenförmigen Vorschubbewegung das niedrigere Kraftbegrenzungsniveau erzeugt. Damit wirkt zu Beginn der Kraftbegrenzung das höhere Kraftbegrenzungsniveau, während nach dem Lösen der Feststelleinrichtung automatisch das niedrigere Kraftbegrenzungsniveau wirkt, da nunmehr das Teil mit dem höheren Kraftbegrenzungsniveau automatisch als Festlager wirkt, ohne dass hierfür eine gesonderte Feststelleinrichtung erforderlich ist.

Ferner kann die Kraftbegrenzungseinrichtung ein Gehäuse aufweisen und zwischen dem Gehäuse und der Gurtwelle und/oder dem Planetengetriebe Mittel zur Begrenzung des Drehwinkels vorgesehen sein, so dass die Vorverlagerung während der Kraftbegrenzung begrenzt ist, wobei die Begrenzung natürlich nicht schlagartig erfolgen muss, sondern auch entsprechend eines Verzögerungsanstieges erfolgen kann.

In diesem Fall wird weiter vorgeschlagen, dass die Mittel durch ein oder mehrere Zahnräder gebildet sind, die in einer dem Gehäuse und einer der Gurtwelle oder dem Planetengetriebe zugeordneten Verzahnung kämmen, und die durch die beiden Verzahnungen gebildete Bahn sich zum Ende hin verjüngt. Die Verzahnungen stellen eine Führung der Relativdrehung dar, die durch die Verjüngung ferner eine sehr gute Möglichkeit des Abbremsens der Relativdrehung ermöglicht.

Nachfolgend wird die Erfindung anhand mehrerer bevorzugter Ausführungsbeispiele erläutert. In den Figuren sind im Einzelnen zu erkennen:
- Fig.1a-1d:: Kraftbegrenzungseinrichtung mit zwei linear zueinander bewegten Teilen
- Fig.2:: Kraftbegrenzungseinrichtung mit einer in einer Gehäuseverzahnung kämmenden eine Drehbewegung ausführenden Verzahnungsscheibe
- Fig.3:: Kraftbegrenzungseinrichtung mit Planetengetriebe in Explosionsdarstellung
- Fig.4:: Kraftbegrenzungseinrichtung mit Planetengetriebe in zusammengesetztem Zustand ohne Gehäuseabdeckung
- Fig.5:: Kraftbegrenzungseinrichtung mit Planetengetriebe in zusammengesetztem Zustand im Querschnitt
- Fig.6a-6d:: Wellenförmige Vorschubbewegung der Verzahnungsscheiben während der Kraftbegrenzung
- Fig.7:: Kraftbegrenzungseinrichtung mit Schaltring
- Fig.8a-8c:: Kraftbegrenzungseinrichtung mit Schaltring in verschiedenen Stellungen während der Kraftbegrenzung
- Fig.9:: Gehäuse der Kraftbegrenzungseinrichtung mit Innenverzahnung, Antriebsscheibe mit Außenverzahnung und Zahnrädern zur Begrenzung des Drehwinkels
- Fig.10:: Verlauf der Kraftbegrenzung über der Relativgeschwindigkeit
- Fig.11:: Verlauf der Kraftbegrenzung für verschiedene Insassentypen und verschiedene Impulse

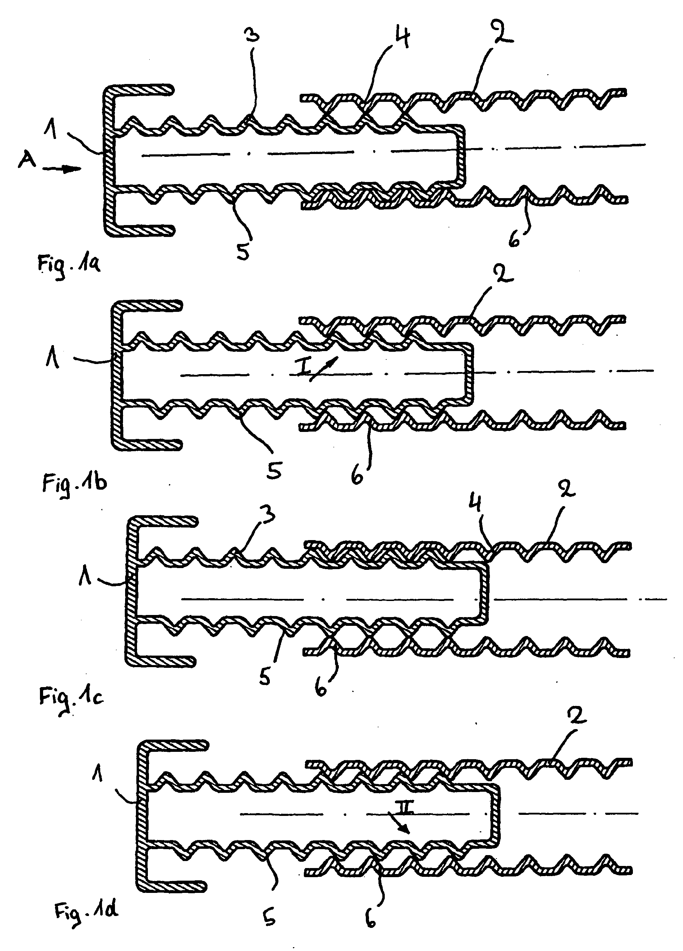

In der Fig.1a bis 1d ist zunächst ein Ausführungsbeispiel der Erfindung zu erkennen, bei der zwei Teile 1 und 2 vorgesehen sind, welche eine erfindungsgemäße Kraftbegrenzungseinrichtung bilden und in verschiedenen Anwendungen im Kraftfahrzeug vorgesehen werden können. Eines der Teile 1 oder 2 ist fest am Fahrzeug angeordnet, in diesem Fall das Teil 2, während das jeweilige andere Teil 1 oder 2, hier das Teil 1, eine kraftbegrenzte Bewegung ausführt. Das Teil 1 kann z.B. ein Lenkrad oder ein diesem zugeordnetes Teil sein, oder auch ein Deformationsglied in der Fahrzeugstruktur sein. Letztlich ist die Kraftbegrenzungseinrichtung für alle Anwendungen in Kraftfahrzeugen geeignet, bei denen Energie vernichtet werden soll bzw. eine kraftbegrenzte Deformation oder Bewegung zum Schutze des Insassen oder der Fahrgastzelle ermöglicht werden soll.

Das Teil 1 ist an seinen gegenüberliegenden Seiten mit Verzahnungen 3 und 5 versehen und greift in ein Teil 2 ein, welches ebenfalls mit Verzahnungen 4 und 6 versehen ist. In der in Fig. 1a gezeigten Stellung befinden sich zunächst die Verzahnungen 5 und 6 im Eingriff. Wird nun eine Kraft in Pfeilrichtung "A" auf das Teil 1 ausgeübt, so gleiten die Verzahnungen 5 und 6 an ihren Zahnflanken ab und das Teil 1 wird in Pfeilrichtung "I", wie in Fig.1b zu erkennen ist, beschleunigt. Durch das Abgleiten an den Zahnflanken gelangen die Verzahnungen 5 und 6 außer Eingriff und die gegenüberliegenden Verzahnungen 3 und 4 werden in Eingriff gedrängt, bis diese ihre in Fig.1c dargestellte Eingriffsstellung erreicht haben. Wird die Vorschubbewegung aus der in Fig.1c dargestellten Stellung weiter fortgesetzt, so beginnen nun die Zahnflanken der Verzahnungen 3 und 4 aneinander abzugleiten und das Teil 1 vollzieht eine Bewegung in Pfeilrichtung "II", so dass schließlich die Verzahnungen 5 und 6 wieder in Eingriff gelangen.

Das Teil 1 vollzieht demnach bei Krafteinwirkung in Pfeilrichtung "A" eine wellenförmige Vorschubbewegung gebildet aus den sich abwechselnden Bewegungen in den Pfeilrichtungen "I" und "II". Aufgrund des sich ständig abwechselnden Beschleunigens und Abbremsens des Teiles 1 wird die Energie abgebaut und die gewünschte kraftbegrenzte Relativbewegung bewirkt.

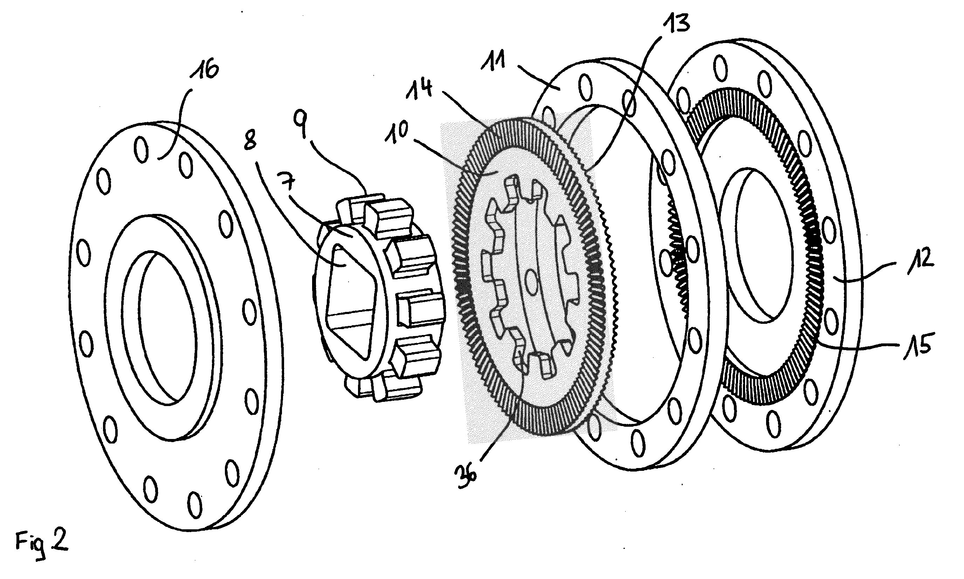

In Fig.2 ist ein alternatives Ausführungsbeispiel dargestellt, bei der die Kraftbegrenzungseinrichtung einem nicht dargestellten Gurtaufroller zugeordnet ist. Die Kraftbegrenzungseinrichtung ermöglicht dann bei blockiertem Gurtaufroller eine kraftbegrenzte Vorwärtsverlagerung des Insassen zur Reduzierung der Insassenbelastung, wie dies auch bei bisher bekannten Gurtaufrollern mit Kraftbegrenzung der Fall ist. Die Kraftbegrenzungseinrichtung weist eine Nabe 7 auf, welche mittig eine Vierkantöffnung 8 zum Anschluss des Gurtaufrollers aufweist. Die Nabe 7 ist außenseitig mit einer Verzahnung 9 versehen, welche in eine Innenverzahnung 36 einer Verzahnungsscheibe 10 eingreift und diese bei blockiertem Gurtaufroller antreibt. Die Kraftbegrenzungseinrichtung ist hierzu entweder zwischen zwei Teilen einer Gurtwelle angeordnet, wie dies bisher von den Torsionsstäben bekannt ist, oder sie ist zwischen dem blockierten Teil, auch Profilkopf genannt, und dem Gehäuserahmen des Gurtaufrollers angeordnet. In dem zweiten Fall blockiert der Gurtaufroller dann nicht in den Gehäuserahmen sondern in die Kraftbegrenzungseinrichtung.

Die Kraftbegrenzungseinrichtung ist gebildet durch zwei feststehende Gehäusescheiben 16 und 12, zwischen denen im zusammengebauten Zustand ein Distanzring 11 angeordnet ist. Ferner ist zwischen den Gehäusescheiben 16 und 12 die von der Gurtwelle während der Kraftbegrenzung angetriebene Verzahnungsscheibe 10 angeordnet, welche beidseitig versetzt zueinander angeordnete Verzahnungen 13 und 14 aufweist. Die Verzahnungen 13 und 14 greifen in den Gehäusescheiben 16 und 12 zugeordnete Verzahnungen ein, wobei hier nur die Verzahnung 15 an der Gehäusescheibe 12 zu erkennen ist. Die Verzahnungen 13 und 14 sind durch radial zum Mittelpunkt der Verzahnungsscheibe 10 gerichtete Zähne gebildet, die sich gleichmäßig über den Umfang der Verzahnungsscheibe 10 verteilen und damit zusätzlich einen Zentrierungseffekt für die Verzahnungsscheibe 10 gegenüber den feststehenden Gehäusescheiben 16 und 12 bewirken.

Beim Antrieb der Verzahnungsscheibe 10 vollzieht diese eine Relativdrehbewegung zu den Gehäusescheiben 16 und 12, so dass die Verzahnungsscheibe 10 und die Gehäusescheiben 16 und 12 hier die anspruchsgemäßen sich relativ zueinander bewegenden Teile darstellen. Die Verzahnungen 13 und 15 und die Verzahnung 14 und die nicht zu erkennende Verzahnung der Gehäusescheibe 16 gelangen dabei wechselweise in und außer Eingriff, so dass die Verzahnungsscheibe 10 eine wellenförmige Vorschubbewegung ausführt, die hier allerdings eine Drehbewegung ist. Der wesentliche erkennbare Unterschied zu der aus dem Stand der Technik bekannten Lösung besteht darin, dass hier ohne Zwischenschaltung eines gesonderten Massesystems direkt das an die Gurtwelle angeschlossene Teil, nämlich die Verzahnungsscheibe 10, die Energie vernichtende Schwingbewegung ausführt. Dies bietet den Vorteil, dass die Kosten für das gesonderte Massesystem entfallen und ein Teil mit einer relativ großen Masse schwingt, wodurch eine entsprechend große Energie vernichtet werden kann, oder anders ausgedrückt mit einer kleinen Kraftbegrenzungseinrichtung ein relativ großes Kraftbegrenzungsniveau erzielt werden kann. Durch die Anregung eines möglichst großen Teiles zur Ausführung der wellenförmigen Vorschubbewegung können auch eine große Anzahl von Zähnen vorgesehen werden, die letztlich eine große Dämpfung und damit ein großes Kraftbegrenzungsniveau ermöglichen.

Ferner ist die Überdeckung der Verzahnungen im Vergleich zu der Lösung aus dem Stand der Technik wesentlich größer, so dass erheblich größere Kräfte aufgenommen werden können bzw. die Teile für dasselbe Kraftbegrenzungsniveau kleiner ausgelegt werden können.

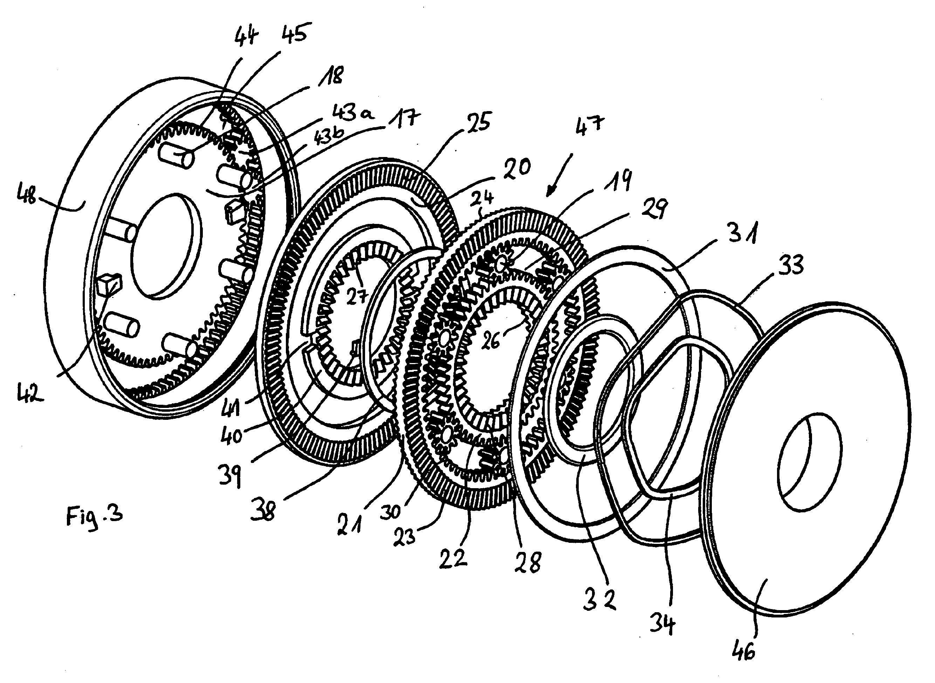

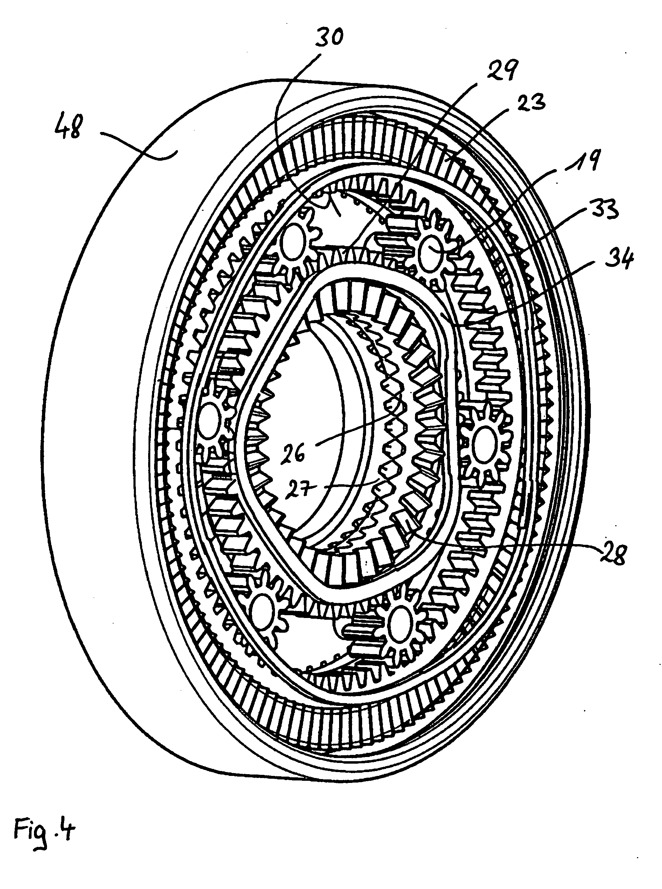

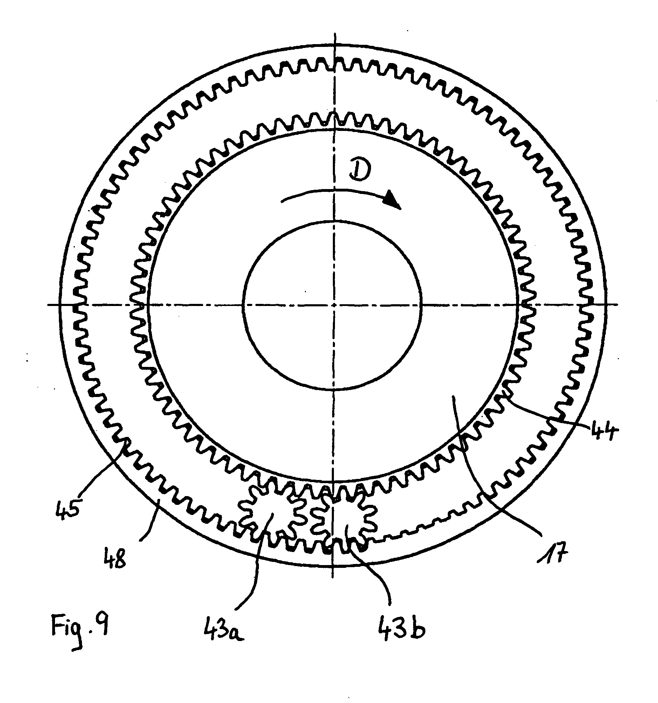

In den Fig.3 bis 5 ist ein weiteres Ausführungsbeispiel einer erfindungsgemäßen Kraftbegrenzungseinrichtung mit einem Planetengetriebe 47 zu erkennen. Die nicht dargestellte Gurtwelle ist hier über eine Antriebsscheibe 17 angeschlossen, welche eine Außenverzahnung 44 aufweist und derart angeordnet ist, dass sie mit einer Innenverzahnung 45 eines Gehäuses 48 der Kraftbegrenzungseinrichtung einen Verzahnungskanal bildet, der auch in der Fig. 9 dargestellt ist.

In dem Verzahnungskanal sind die Zahnräder 43a und 43b angeordnet, die in der feststehenden Innenverzahnung 45 des Gehäuses 48 und der sich drehenden Außenverzahnung 44 der Antriebsscheibe 17 kämmen. Der Verzahnungskanal verjüngt sich zum Ende hin, so dass die Drehbewegung der Antriebsscheibe 17 in Pfeilrichtung "D" begrenzt ist und das Anhalten der Antriebsscheibe 17 gedämpft erfolgt.

Die Kraftbegrenzungseinrichtung ist hier mit einem Planetengetriebe 47 versehen, welches zwischen der feststehenden Gehäusescheibe 46 und den gehäusefesten Verzahnungsringen 20 und 40 angeordnet ist. Die Antriebsscheibe 17 ist mit axialgerichteten Zapfen 18 versehen, die in die Planetenzahnräder 19 eingreifen und diese in Umfangsrichtung antreiben.

Die Planetenzahnräder 19 befinden sich im Eingriff mit einer Außenverzahnung 29 eines Sonnenrades 22 und einer Innenverzahnung 30 eines Innenverzahnungsringes 21. Sowohl der Innenverzahnungsring 21 als auch das Sonnenrad 22 sind mit gegenüberliegenden axialgerichteten Verzahnungen 23,24 und 26,28 versehen, welche zwischen den an den feststehenden Verzahnungsringen 20 und 40 angeordneten Verzahnungen 25 und 27 und den Verzahnungen 35 und 37 der Gehäusescheibe 46 angeordnet sind. Zwischen den Verzahnungen 23,35,28 und 37 sind Gummiringe 31,32 angeordnet, welche als Dämpfungsmittel für die Relativbewegung der Teile zueinander wirken und die relativ hohe Anlaufgeschwindigkeit zu Beginn der Kraftbegrenzung dämpfen. Ferner sind Federringe 33 und 34 vorgesehen, welche den Innenverzahnungsring 21 und das Sonnenrad 22 axial mit einer Federkraft beaufschlagen, und so die Verzahnungen 24,25 und 26,27 in Eingriff drängen.

Das Prinzip der Kraftbegrenzung ist identisch zu dem in Fig.2 beschriebenen Ausführungsbeispiel, nur dass hier je nachdem ob der Innenverzahnungsring 21 oder das Sonnenrad 22 festgelegt ist, das jeweils andere Teil die wellenförmige Vorschubbewegung ausführt, welche hier ebenfalls eine Drehbewegung ist. Da das durch die wellenförmige Vorschubbewegung des Innenverzahnungsringes 21 und des Sonnenrades 22 erzeugte Kraftbegrenzungsniveau unterschiedlich sein kann, können mit dieser Kraftbegrenzungseinrichtung folglich auch unterschiedliche Niveaus der Kraftbegrenzung eingestellt werden, je nachdem ob der Innenverzahnungsring 21 oder das Sonnenrad 22 angetrieben wird.

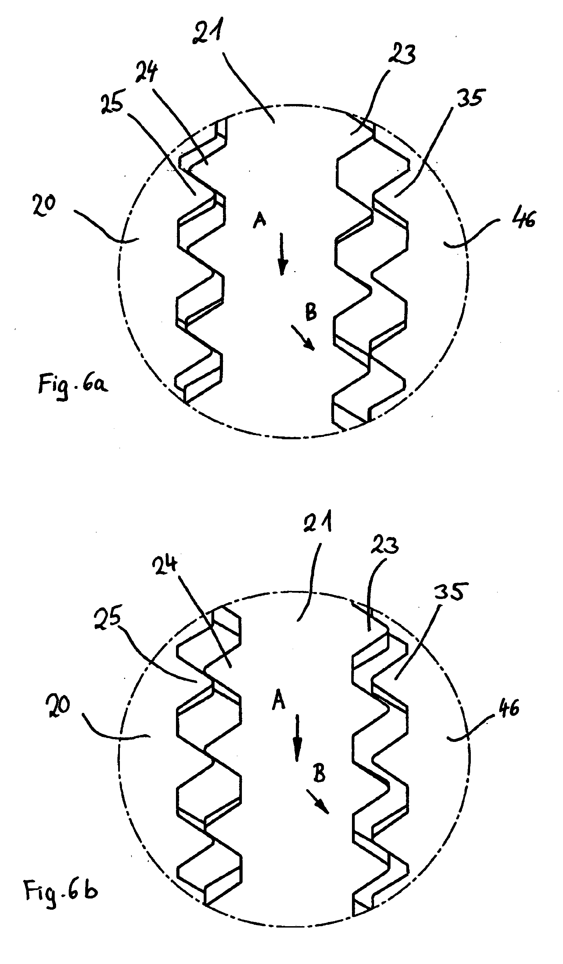

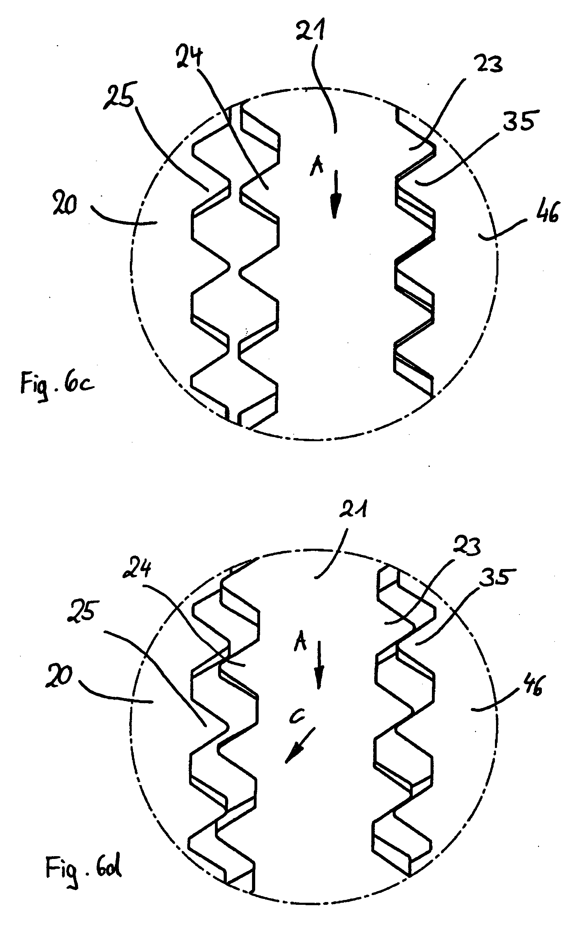

Das Prinzip der Kraftbegrenzung ist in den Fig.6a bis 6d nochmals anhand der Bewegungen der Verzahnungen 24,25,23 und 35 des Innenverzahnungsringes 21 dargestellt. Die Bewegung des Sonnenrades 22 und der Verzahnungsscheibe 10 aus Fig.2 während der Kraftbegrenzung ist identisch zu der des Innenverzahnungsringes 21 und wird aus diesem Grunde nicht dargestellt.

Der Innenverzahnungsring 21 wird durch die Planetenzahnräder 19 zunächst in Pfeilrichtung "A" angetrieben. Durch das Abgleiten der Zahnflanken der Verzahnungen 24 und 25 wird der Umfangsbewegung in Pfeilrichtung "A" eine Bewegung in Axialrichtung überlagert, so dass sich der Innenverzahnungsring 21 dabei in Pfeilrichtung "B" bewegt und die Verzahnungen 24 und 25 außer Eingriff und die Verzahnungen 23 und 35 in Eingriff gedrängt werden. Nach dem Erreichen der in Fig.6c dargestellten Umkehrstellung und Fortführung der Vorschubbewegung wird der Innenverzahnungsring 21 dann entgegengesetzt in Pfeilrichtung "C" bewegt. Aufgrund des ständigen Abbremsens und wieder Beschleunigens des Innenverzahnungsringes 21 in und aus den Umkehrstellungen wird die Energie dann kinematisch abgebaut. Wobei die Energie dann z.B. in Wärme, Verlustenergie durch innere Reibung und dergleichen umgewandelt wird.

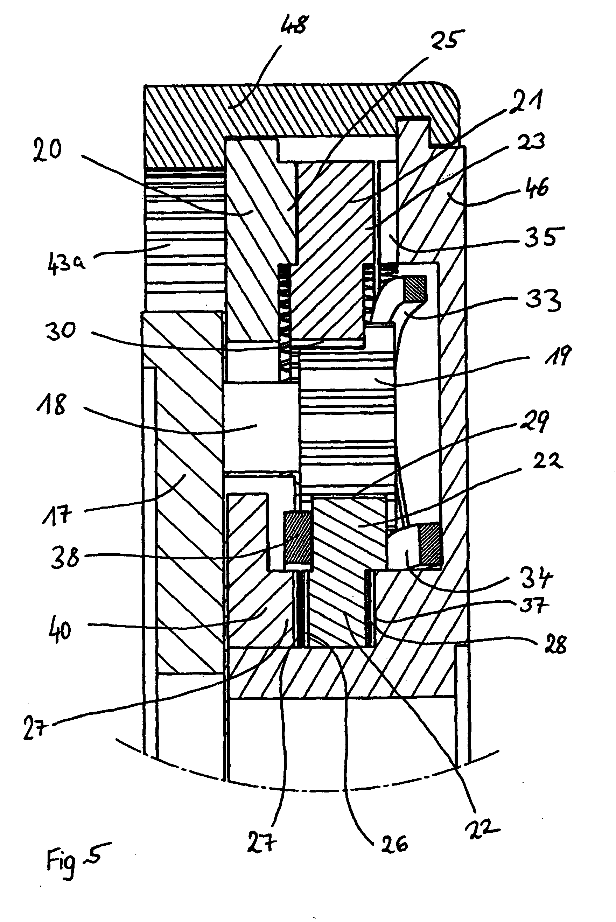

In Fig.5 ist ferner zu erkennen, wie der Schaltring 38 das Sonnenrad 22 in der Stellung hält, in der sich die Verzahnungen 28 und 37 in Eingriff befinden, obwohl dieses von der anderen Seite durch den Federring 34 in Richtung des Verzahnungsringes 40 mit einer Federkraft beaufschlagt wird. Hierdurch ist das Sonnenrad 22 zu Beginn der Kraftbegrenzung festgelegt, so dass es keine wellenförmige Vorschubbewegung ausführen kann und demnach gegenüber der Gehäusescheibe 46 festgelegt ist. In dieser Stellung wird das Kraftbegrenzungsniveau ausschließlich durch die beschriebene Bewegung des Innenverzahnungsringes 21 bestimmt und das Sonnenrad 22 kann als Festlager angesehen werden.

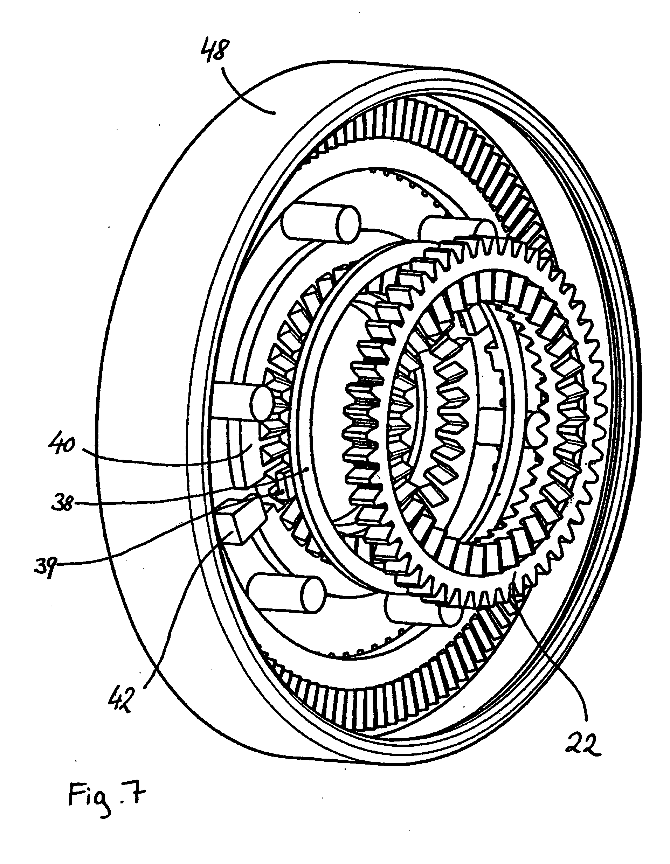

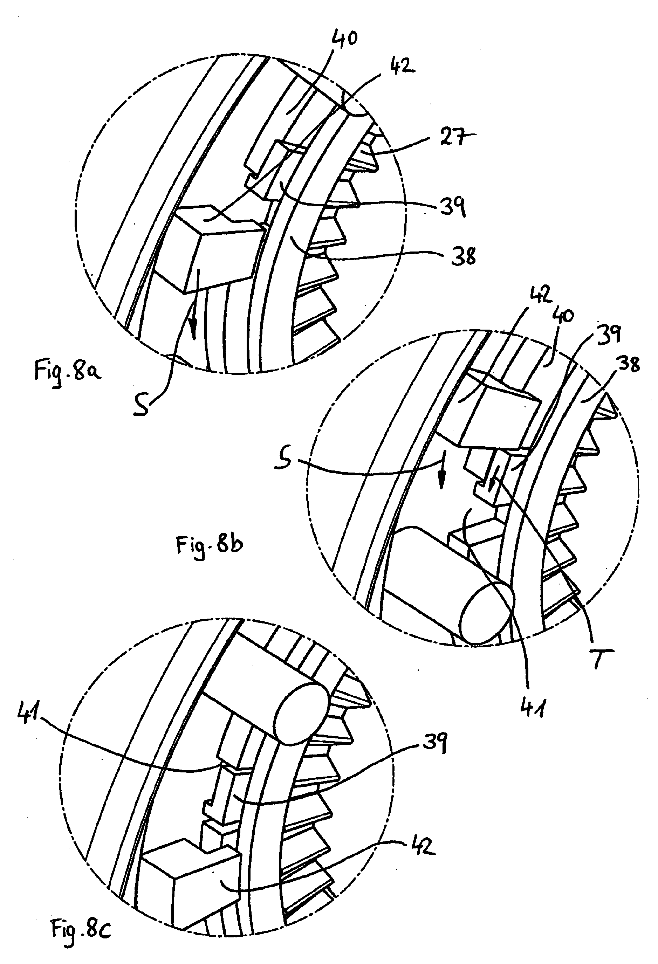

Wie in den Fig.7 und 8a zu erkennen ist, wird der Schaltring 38 zu Beginn der Kraftbegrenzung durch einen sich auf dem Verzahnungsring 40 abstützenden Mitnehmer 39 in einem Abstand von diesem gehalten, so dass die Verzahnungen 27 und 26 nicht in Eingriff gelangen können. Der Schaltring 38 wirkt als lösbare Feststelleinrichtung, wobei die Festlegung des Sonnenrades 22 letztlich durch das ineinander Greifen der Verzahnungen 28 und 37 erfolgt.

Wie in den Fig.8a bis 8c dargestellt, erfolgt das Schalten dadurch, dass die Antriebsscheibe 17 mit einem Anschlag 42 versehen ist, der bei Rotation während der Kraftbegrenzung in Pfeilrichtung "S" an dem Mitnehmer 39 zur Anlage gelangt und bei weiterer Drehung diesen in Umfangsrichtung verschiebt. Der Mitnehmer 39 kommt durch die Verschiebung in Umfangsrichtung über eine Ausnehmung 41 in dem Verzahnungsring 40 und wird durch die Federkraft des Federringes 34 in diese gedrückt. Durch die Axialverschiebung des Schaltringes 38 wird das aus Gründen der Übersichtlichkeit in den Fig.8a -8c nicht dargestellte Sonnenrad 22 axial nicht mehr unterstützt und kann sich zwischen den Verzahnungen 27 und 37 frei bewegen. Da die durch die wellenförmige Vorschubbewegung des Innenverzahnungsinges 21 erzeugte Kraftbegrenzung höher als die durch die wellenförmige Vorschubbewegung des Sonnenrades 22 erzeugte Kraftbegrenzung ist, beginnt nach der Schaltung durch die beschriebene Bewegung des Schaltringes 38 das Sonnenrad 22 die Vorschubbewegung auszuführen, während der Innenverzahnungsring 21 als Festlager wirkt. Da das Niveau der Kraftbegrenzung abhängig von der Unfallschwere und dem Insassen ist, kann das durch die wellenförmige Vorschubbewegung des Sonnenrades 22 erzeugte Kraftbegrenzungsniveau auch so hoch sein, dass der Innenverzahnungsring 21 nicht mehr als Festlager wirkt, sondern ebenfalls zu einer schwingenden Drehbewegung angeregt wird. In diesem Fall liegt eine Reihenschaltung des Sonnenrades 22 und des Innenverzahnungsringes 21 vor und der Innenverzahnungsring 21 hat gleichzeitig die Funktion einer Überlastsicherung.

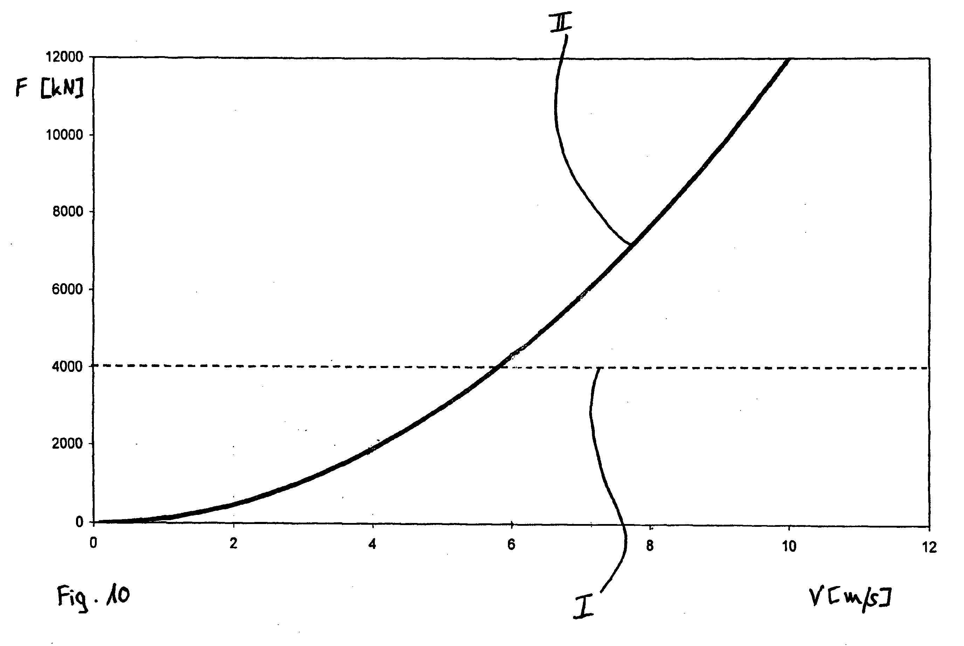

In Fig.10 ist zum besseren Verständnis der Erfindung zunächst die Veränderung der Kraftbegrenzung aufgetragen über der Gurtauszugsgeschwindigkeit dargestellt. Die Gurtauszugsgeschwindigkeit resultiert im Crash daraus, dass der Insasse zum Zeitpunkt T0 dem Auftreffen des Fahrzeuges auf das Hindernis, an dem die Fahrzeuggeschwindigkeit idealisiert als gleich null angenommen wird, aufgrund seiner Trägheit noch eine Vorwärtsbewegung ausführt, so dass der Gurt aus dem fest mit dem Fahrzeug verbundenen Gurtaufroller ausgezogen wird. Die mit "I" gekennzeichnete Gerade stellt den Verlauf der Kraftbegrenzung mit einem Torsionsstab von 4000 N nach heutigem Stand der Technik dar. Das Kraftbegrenzungsniveau ist unabhängig von der Gurtauszugsgeschwindigkeit, so dass diese Art der Kraftbegrenzung weder insassen- noch crashadaptiv ist. Im Vergleich dazu ist mit "II" der Verlauf der Kraftbegrenzung mit der erfindungsgemäßen Kraftbegrenzungsvorrichtung dargestellt. Erkennbar ist die Kraftbegrenzung proportional zu dem Quadrat der Gurtbandauszugsgeschwindigkeit. Dies ist dadurch begründet, dass bei höherer Gurtauszugsgeschwindigkeit die Frequenz des schwingenden Systems höher ist und damit auch die durch die Kraftbegrenzungseinrichtung vernichtete Energie bzw. das damit verbundene Kraftbegrenzungsniveau.

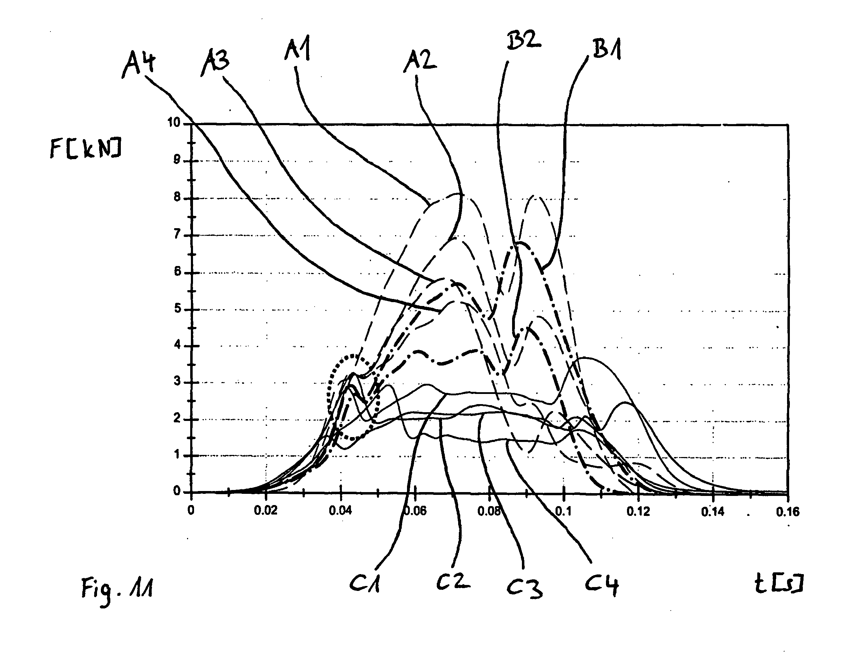

In Fig.11 ist der Verlauf der Kraftbegrenzung während des Unfalles für verschiedene Unfallimpulse und Insassentypen dargestellt, um den praktischen Nutzen für die Rückhaltefunktion des Insassen besser zu verstehen. Die Kurven C1 bis C4 zeigen den Kraftbegrenzungsverlauf für eine Crashgeschwindigkeit von 32 km/h mit einer erfindungsgemäßen Kraftbegrenzungseinrichtung nach Fig.2 mit 42 wechselweise in und außer Eingriff gelangenden Zähnen. C1 zeigt die Kurve für einen HIII Dummy, 95% Mann, C2 die Kurve eines HIII Dummys 50% Frau, C3 die Kurve eines HIII Dummys 5% Frau und schließlich die Kurve C4 die Kurve für einen TNO 10 jähriges Kind. Die Kraftbegrenzungseinrichtung stellt sich erkennbar auf den Insassen ein, so dass der 95% Mann in der Kurve C1 eine deutlich höhere Kraftbegrenzung als die 5% Frau (Kurve C3) oder das 10 jährige Kind der Kurve C4 erfährt. In der Kurve A3 ist die Kraftbegrenzungskurve für einen HIII Dummy, eine 5% Frau, bei einer Aufprallgeschwindigkeit von 50 km/h und in der Kurve A2 die Kurve für einen HIII Dummy, ein 50% Mann, bei einer Aufprallgeschwindigkeit von 50 km/h dargestellt. Wiederum ist klar erkennbar, dass der 50% Mann die deutlich höhere Kraftbegrenzung erfährt als die 5% Frau. Die Kurve A1 zeigt den Kraftbegrenzungsverlauf für einen HIII Dummy 95% Mann und die Kurve A4 den Kraftbegrenzungsverlauf bei einer Aufprallgeschwindigkeit von 56 km/h mit derselben Aussage. Das Kraftbegrenzungsniveau der erfindungsgemäßen Kraftbegrenzungseinrichtung ist damit insassenadaptiv.

Im Vergleich der Kurven C1 bis C4 zu den Kurven A1 bis A4 ist erkennbar, dass auch die Aufprallgeschwindigkeit einen deutlichen Einfluss auf die Kraftbegrenzungscharakteristik besitzt, wie z.B. an den Kurven A3 und C3 zu erkennen ist, die sich nur durch die Aufprallgeschwindigkeiten von 32 km/h und 50 km/h unterscheiden. Das Kraftbegrenzungsniveau der erfindungsgemäßen Kraftbegrenzungseinrichtung ist damit crashadaptiv.

Ferner ist in der Kurve B1 der Kraftbegrenzungsverlauf eines HIII Dummys 50% Mann und in der Kurve B2 der Kraftbegrenzungsverlauf eines HIII Dummys einer 5% Frau bei jeweils einer Aufprallgeschwindigkeit von 50 km/h zu erkennen, wobei hier die Kraftbegrenzungseinrichtung 36 Zähne aufweist. Die Kurven A2 und B1 stellen damit die Kraftbegrenzungskurven für identische Dummys bei identischer Aufprallgeschwindigkeit bei Verwendung von Kraftbegrenzungseinrichtungen mit unterschiedlich vielen Zähnen dar. Die Kurve B1 der Kraftbegrenzungseinrichtung mit 36 Zähnen liegt deutlich unterhalb der Kurve A2 der Kraftbegrenzungseinrichtung mit 42 Zähnen. Dies ist damit zu erklären, dass durch die zähneanzahl die Dämpfung der Kraftbegrenzungseinrichtung und damit das Niveau der Kraftbegrenzung entscheidend mitbestimmt wird. Je mehr Zähne die Kraftbegrenzungseinrichtung aufweist, desto höher liegt das Kraftbegrenzungsniveau.

## Patentansprüche

1. Kraftbegrenzungseinrichtung für ein Kraftfahrzeug, welche an einer Gurtwelle eines Gurtaufrollers angeordnet ist, und wenigstens zwei relativ zueinander mit einer frequenzbedingt definierten Bewegung gesteuerte Teile (1,2,10,12,16,20,21,46,22,40) aufweist, **dadurch gekennzeichnet, dass** die sich relativ zueinander bewegenden Teile (1,2,10,12,16,20,21,46,22,40) ineinandergreifende Verzahnungen (3,4,13,15,24,25,26,27) aufweisen und die frequenzbedingt gesteuerte Bewegung dadurch erfolgt, dass wenigstens eines der Teile (1,10,21,22) gegenüber dem anderen Teil (2,12,16,20,40,46) eine wellenförmige Vorschubbewegung ausführt, bei der die Verzahnungen (3,4,13,15,24,25,26,27) wechselnd in Eingriff und außer Eingriff gelangen, wobei die wellenförmige Vorschubbewegung aus sich abwechselnden Bewegungen in unterschiedliche Richtungen gebildet ist, und dass das die wellenförmige Vorschubbewegung ausführende Teil (10,21,22) mit der Gurtwelle kraftschlüssig verbunden ist.

2. Kraftbegrenzungseinrichtung nach Anspruch 1, **dadurch gekennzeichnet, dass** die sich relativ zueinander bewegenden Teile (1,2,10,12,16,20,21,22,40,46) wenigstens ein zweites Paar ineinandergreifender Verzahnungen (5,6,14,23,35,28,37) aufweisen, und das zweite Paar ineinandergreifender Verzahnungen (5,6,14,23,35,28,37) versetzt zu dem ersten Paar ineinandergreifender Verzahnungen (3,4,13,15,24,25,26,27) ineinandergreift.

3. Kraftbegrenzungseinrichtung nach Anspruch 2, **dadurch gekennzeichnet, dass** das erste (3,4,13,15,24,25,26,27) und das zweite (5,6,14,23,35,28,37) Paar ineinandergreifender Verzahnungen auf gegenüberliegenden Seiten angeordnet sind, und wenigstens zwei Verzahnungen (3,5,13,14,23,24,26,28) an einem der Teile (1,10,21,22) zueinander versetzt angeordnet sind.

4. Kraftbegrenzungseinrichtung nach einem der vorangegangenen Ansprüche, **dadurch gekennzeichnet, dass** zwischen den ineinandergreifenden Verzahnungen (3,4,5,6,13,14,15,23,24,25,26,27,28,35,37) ein Dämpfungsmittel angeordnet ist.

5. Kraftbegrenzungseinrichtung nach Anspruch 4, **dadurch gekennzeichnet, dass** das Dämpfungsmittel aus einer die Hohlräume zwischen den Verzahnungen (3,4,5,6,13,14,15,23,24,25,26,27,28,35,37) ausfüllenden Fett- oder Kettmasse gebildet ist.

6. Kraftbegrenzungseinrichtung nach Anspruch 4, **dadurch gekennzeichnet, dass** das Dämpfungsmittel durch eine zwischen den Verzahnungen (3,4,5,6,13,14,15,23,24,25,26,27,28,35,37) angeordnete Gummischeibe (31,32) gebildet ist.

7. Kraftbegrenzungseinrichtung nach einem der vorangegangenen Ansprüche, **dadurch gekennzeichnet, dass** das die Vorschubbewegung ausführende Teil (10,21,22) durch eine Verzahnungsscheibe mit einer Axialverzahnung (13,14,23,24,26,28) gebildet ist, und die Verzahnungsscheibe mit ihrer Axialverzahnung (13,14,23,24,26,28) in eine gehäusefeste Verzahnung (15,25,27,35,37) der Kraftbegrenzungseinrichtung in Eingriff bringbar ist.

8. Kraftbegrenzungseinrichtung nach Anspruch 7, **dadurch gekennzeichnet, dass** die Verzahnungsscheibe (21,22) in Richtung des ineinander Greifens der Axialverzahnung (24,26) und der gehäusefesten Verzahnung (25,27) federbelastet ist.

9. Kraftbegrenzungseinrichtung nach einem der Ansprüche 7 oder 8, **dadurch gekennzeichnet, dass** die Axialverzahnung (13,14,23,24,26,28) durch radial zum Mittelpunkt der Verzahnungsscheibe (10,21,22) gerichtete Zähne gebildet ist.

10. Kraftbegrenzungseinrichtung nach einem der vorangegangenen Ansprüche 7 oder 8, **dadurch gekennzeichnet, dass** zwischen der Gurtwelle und dem die wellenförmige Vorschubbewegung ausführenden Teil (21,22) ein Getriebe vorgesehen ist.

11. Kraftbegrenzungseinrichtung nach Anspruch 10, **dadurch gekennzeichnet, dass** das Getriebe ein Planetengetriebe (47) ist, die Gurtwelle mit den Planetenrädern (19) verbunden ist, und die Verzahnungsscheibe (21,22) durch das Sonnenrad (22) und/oder einen Innenverzahnungsring (21) gebildet ist, welche Radialverzahnungen (29,30) aufweisen, in die die Planetenräder (19) eingreifen.

12. Kraftbegrenzungseinrichtung nach Anspruch 11, **dadurch gekennzeichnet, dass** das durch die wellenförmige Vorschubbewegung des Sonnenrades (22) und das durch die wellenförmige Vorschubbewegung des Innenverzahnungsringes (21) erzeugte Kraftbegrenzungsniveau unterschiedlich sind.

13. Kraftbegrenzungseinrichtung nach Anspruch 11 oder 12, **dadurch gekennzeichnet, dass** das Sonnenrad (22) und/oder der Innenverzahnungsring (21) eine lösbare Feststelleinrichtung aufweisen.

14. Kraftbegrenzungseinrichtung nach Anspruch 13, **dadurch gekennzeichnet, dass** die lösbare Feststelleinrichtung dem Sonnenrad (22) oder dem Innenverzahnungsring (21) zugeordnet ist, welches/welcher bei der wellenförmigen Vorschubbewegung das niedrigere Kraftbegrenzungsniveau erzeugt.

15. Kraftbegrenzungseinrichtung nach einem der Ansprüche 1 bis 10 und/oder nach einem der Ansprüche 11 bis 14, **dadurch gekennzeichnet, dass** die Kraftbegrenzungseinrichtung ein Gehäuse (48) aufweist, und zwischen dem Gehäuse (48) und der Gurtwelle und/oder dem Planetengetriebe (47) Mittel zur Begrenzung des Drehwinkels vorgesehen sind.

16. Kraftbegrenzungseinrichtung nach Anspruch 15, **dadurch gekennzeichnet, dass** die Mittel durch ein oder mehrere Zahnräder (43a,43b) gebildet sind, die in einer dem Gehäuse (48) und einer der Gurtwelle, einer mit der Gurtwelle kraftschlüssig verbundenen Antriebsscheibe (17) oder dem Planetengetriebe (47) zugeordneten Verzahnung (44,45) kämmen, und die durch die beiden Verzahnungen (44,45) gebildete Bahn sich zum Ende hin verjüngt.

## Claims

1. A force-limiting device for a motor vehicle, which device is disposed on a belt shaft of a belt retractor, and includes at least two parts (1, 2, 10, 12, 16, 20, 21, 46, 22, 40) driven relative to one another with a frequency-dependent defined movement, **characterised in that** the parts (1, 2, 10, 12, 16, 20, 21, 46, 22, 40) moving relative to one another include gearings (3, 4, 13, 15, 24, 25, 26, 27) that mutually engage, and the frequency-dependent controlled movement results from at least one of the parts (1, 10, 21, 22) performing a wave-shaped feed motion via which the gearings (3, 4, 13, 15, 24, 25, 26, 27) alternatingly come into and out of engagement, wherein the wave-shaped feed motion is formed by alternating movements in different directions, and **in that** the part (10, 21, 22) performing the wave-shaped feed motion is connected to the belt shaft by friction-fit.

2. The force-limiting device according to claim 1, **characterised in that** the parts (1, 2, 10, 12, 16, 20, 21, 46, 22, 40) moving relative to one another include at least one second pair of mutually engaging gearings (5, 6, 14, 23, 35, 28, 37), and the second pair of mutually engaging gearings (5, 6, 14, 23, 35, 28, 37) engage offset to the first pair of mutually engaging gearings (3, 4, 13, 15, 24, 25, 26, 27).

3. The force-limiting device according to claim 2, **characterised in that** the first (3, 4, 13, 15, 24, 25, 26, 27) and the second (5, 6, 14, 23, 35, 28, 37) pair of mutually engaging gearings are disposed on opposing sides, and at least two gearings (3, 5, 13, 14, 23, 24, 26, 28) are disposed offset from each other on one of the parts (1, 10, 21, 22).

4. The force-limiting device according to one of the preceding claims, **characterised in that** a damping means is disposed between the intermeshing gearings (3, 4, 5, 13, 14, 15, 23, 24, 25, 26, 27, 28, 35, 37).

5. The force-limiting device according to claim 4, **characterised in that** the damping means is formed by a grease compound or chain compound filling one of the hollow spaces between the gearings (3, 4, 5, 13, 14, 15, 23, 24, 25, 26, 27, 28, 35, 37).

6. The force-limiting device according to claim 4, **characterised in that** the damping means is formed by a rubber disc (31, 32) disposed between the gearings (3, 4, 5, 13, 14, 15, 23, 24, 25, 26, 27, 28, 35, 37).

7. The force-limiting device according to one of the preceding claims, **characterised in that** the part (10, 21, 22) performing the feed motion is formed by a gearing disc including an axial gearing (13, 14, 23, 24, 26, 28), and the gearing disc, with its axial gearing (13, 14, 23, 24, 26, 28), can be brought into engagement with a gearing (15, 25, 27, 35, 37) of the force-limiting device, which gearing (15, 25, 27, 35, 37) is fixed with respect to the housing.

8. The force-limiting device according to claim 7, **characterised in that** the gearing disc (21, 22) is spring-loaded in the direction of the mutual engaging of the axial gearing (24, 26) and of the fixed gearing (25, 27).

9. The force-limiting device according to one of claims 7 or 8, **characterised in that** the axial gearing (13, 14, 23, 24, 26, 28) is formed by gearings directed radially towards the centre of the gearing disc (10, 21, 22).

10. The force-limiting device according to one of the preceding claims 7 or 8, **characterised in that** a transmission is provided between the belt shaft and the part (21, 22) performing the wave-shaped feed motion.

11. The force-limiting device according to claim 10, **characterised in that** the transmission is a planetary transmission (47), the belt shaft is connected to the planetary wheels (19), and the gearing disc (21, 22) is formed by the sun wheel (22) and/or an internal gearing ring (21), which include radial gearings (29, 30) in which the planetary wheels (19) engage.

12. The force-limiting device according to claim 11, **characterised in that** the force-limiting level generated by the wave-shaped feed motion of the sun wheel (22) and by the wave-shaped feed motion of the internal gearing ring (21) are different.

13. The force-limiting device according to claim 11 or 12, **characterised in that** the sun wheel (22) and/or the internal gearing ring (21) include a releasable locking device.

14. The force-limiting device according to claim 13, **characterised in that** the releasable locking device is associated with the sun wheel (22) or with the internal gearing ring (21), which sun wheel (22)/internal gearing ring (21) generates the lower force-limiting level upon the wave-shaped feed motion.

15. The force-limiting device according to one of claims 1 to 10 and/or according to one of claims 11 to 14, **characterised in that** the force-limiting device includes a housing (48), and means for limiting the angle of rotation are provided between the housing (48) and the belt shaft and/or the planetary transmission (47).

16. The force-limiting device according to claim 15, **characterised in that** the means are formed by one or more gear wheels (43a, 43b), which gear wheels (43a, 43b) mesh in a gearing (44, 45) associated with the housing (48) and a gearing associated with the belt shaft, associated with a drive disc (17) connected in a friction-fit manner to the belt shaft, or associated with the planetary transmission (47), and the path formed by both gearings (44, 45) tapers toward the end.

## Revendications

1. Dispositif limiteur d'effort pour véhicule automobile, qui est disposé sur un arbre de ceinture d'un enrouleur de ceinture, et comporte au moins deux pièces (1, 2, 10, 12, 16, 20, 21, 46, 22, 40) commandées l'une par rapport à l'autre avec un mouvement défini en fonction de la fréquence, **caractérisé en ce que** les pièces (1, 2, 10, 12, 16, 20, 21, 46, 22, 40) se déplaçant l'une par rapport à l'autre comportent des dentures (3, 4, 13, 15, 24, 25, 26, 27) en prise l'une avec l'autre et le mouvement commandé en fonction de la fréquence s'effectue par le fait qu'au moins l'une des pièces (1, 10, 21, 22) exécute un mouvement d'avance ondulatoire par rapport à l'autre pièce (2, 12, 16, 20, 40, 46), dans lequel les dentures (3, 4, 13, 15, 24, 25, 26, 27) viennent en prise et se dégagent successivement, le mouvement d'avance ondulatoire étant formé par des mouvements alternants dans différentes directions, et **en ce que** la pièce (10, 21, 22) exécutant le mouvement d'avance ondulatoire est reliée à l'arbre de ceinture par adhérence.

2. Dispositif limiteur d'effort selon la revendication 1, **caractérisé en ce que** les pièces (1, 2, 10, 12, 16, 20, 21, 22, 40, 46) se déplaçant l'une par rapport à l'autre comportent au moins une seconde paire de dentures (5, 6, 14, 23, 35, 28, 37) en prise l'une avec l'autre, et la seconde paire de dentures (5, 6, 14, 23, 35, 28, 37) en prise l'une avec l'autre s'engrènent l'une dans l'autre de manière décalée par rapport à la première paire de dentures (3, 4, 13, 15, 24, 25, 26, 27) en prise l'une avec l'autre.

3. Dispositif limiteur d'effort selon la revendication 2, **caractérisé en ce que** la première (3, 4, 13, 15, 24, 25, 26, 27) et la seconde (5, 6, 14, 23, 35, 28, 37) paire de dentures en prise l'une avec l'autre sont disposées sur des côtés opposés, et au moins deux dentures (3, 5, 13, 14, 23, 24, 26, 28) sur l'une des pièces (1, 10, 21, 22) sont disposées décalées l'une par rapport à l'autre.

4. Dispositif limiteur d'effort selon l'une des revendications précédentes, **caractérisé en ce qu'**un moyen d'amortissement est disposé entre les dentures (3, 4, 5, 6, 13, 14, 15, 23, 24, 25, 26, 27, 28, 35, 37) en prise l'une avec l'autre.

5. Dispositif limiteur d'effort selon la revendication 4, **caractérisé en ce que** le moyen d'amortissement est formé à partir d'une masse de graisse ou d'une substance pour chaîne remplissant les cavités entre les dentures (3, 4, 5, 6, 13, 14, 15, 23, 24, 25, 26, 27, 28, 35, 37).

6. Dispositif limiteur d'effort selon la revendication 4, **caractérisé en ce que** le moyen d'amortissement est formé à partir d'une rondelle de caoutchouc (31, 32) disposée entre les dentures (3, 4, 5, 6, 13, 14, 15, 23, 24, 25, 26, 27, 28, 35, 37).

7. Dispositif limiteur d'effort selon l'une des revendications précédentes, **caractérisé en ce que** la pièce (10, 21, 22) exécutant le mouvement d'avance est formée par un disque d'engrenage comprenant une denture axiale (13, 14, 23, 24, 26, 28), et le disque d'engrenage peut être amené en prise au moyen de sa denture axiale (13, 14, 23, 24, 26, 28) dans une denture (15, 25, 27, 35, 37) fixée à demeure sur le carter du dispositif limiteur d'effort.

8. Dispositif limiteur d'effort selon la revendication 7, **caractérisé en ce que** le disque d'engrenage (21, 22) est sollicité par un ressort dans la direction de l'engrenage de la denture axiale (24, 25) avec la denture (25, 27) fixée à demeure sur le carter.

9. Dispositif limiteur d'effort selon l'une des revendications 7 ou 8, **caractérisé en ce que** la denture axiale (13, 14, 23, 24, 26, 28) est formée par des dents orientées radialement vers le centre du disque d'engrenage (10, 21, 22).

10. Dispositif limiteur d'effort selon l'une des revendications précédentes 7 ou 8, **caractérisé en ce qu'**un mécanisme de transmission est prévu entre l'arbre de ceinture et la pièce (21, 22) exécutant le mouvement d'avance ondulatoire.

11. Dispositif limiteur d'effort selon la revendication 10, **caractérisé en ce que** le mécanisme de transmission est un engrenage planétaire (47), l'arbre de ceinture est relié aux roues planétaires (19), et le disque d'engrenage (21, 22) est formé par la roue solaire (22) et/ou un anneau à denture intérieure (21), qui comportent des dentures radiales (29, 30) dans lesquelles les roues planétaires (19) s'engrènent.

12. Dispositif limiteur d'effort selon la revendication 11, **caractérisé en ce que** le niveau de limitation d'effort généré par le mouvement d'avance ondulatoire de la roue solaire (22) et le niveau de limitation d'effort généré par le mouvement d'avance ondulatoire de l'anneau à denture intérieure (21) sont différents.

13. Dispositif limiteur d'effort selon la revendication 11 ou 12, **caractérisé en ce que** la roue solaire (22) et/ou l'anneau à denture intérieure (21) comportent un dispositif de blocage pouvant être desserré.

14. Dispositif limiteur d'effort selon la revendication 13, **caractérisé en ce que** le dispositif de blocage pouvant être desserré est associé à la roue solaire (22) ou à l'anneau à denture intérieure (21) qui génère le plus faible niveau de limitation d'effort lors du mouvement d'avance ondulatoire.

15. Dispositif limiteur d'effort selon l'une des revendications 1 à 10 et/ou selon l'une des revendications 11 à 14, **caractérisé en ce que** le dispositif limiteur d'effort comporte un carter (48) et des moyens destinés à limiter l'angle de rotation sont prévus entre le carter (48) et l'arbre de ceinture et/ou l'engrenage planétaire (47).

16. Dispositif limiteur d'effort selon la revendication 15, **caractérisé en ce que** les moyens sont formés par une ou plusieurs roues d'engrenage (43a, 43b) qui s'engrènent dans une denture (44, 45) associée au carter (48) et une denture (44, 45) associée à l'arbre de ceinture, à une roue d'entraînement (17) reliée par adhérence à l'arbre de ceinture ou à l'engrenage planétaire (47), et la voie formée par les deux dentures (44, 45) s'amincit vers l'extrémité.
